**Europäisches Patentamt**

**European Patent Office**

**Office européen des brevets**

(11) Veröffentlichungsnummer: **0 442 146 A1**

# EUROPÄISCHE PATENTANMELDUNG

(21) Anmeldenummer: 90125649.5

(22) Anmeldetag: 07.10.86

(51) Int. Cl.⁵: **B01D 53/34, B01D 5/00**

---

Diese Anmeldung is am 28 - 12 - 1990 als Teilanmeldung zu der unter INID-Kode 60 erwähnten Anmeldung eingereicht worden.

(30) Priorität: 15.10.85 DE 3536703
19.03.86 DE 3609292

(43) Veröffentlichungstag der Anmeldung:
**21.08.91 Patentblatt 91/34**

(60) Veröffentlichungsnummer der früheren Anmeldung nach Art. 76 EPÜ: **0 222 158**

(84) Benannte Vertragsstaaten:
**AT BE CH DE GB LI NL SE**

(71) Anmelder: **Frey, Gerhard, Dipl.-Ing.**
**Fasanenweg 17**
**W-8130 Starnberg(DE)**

(72) Erfinder: **Frey, Gerhard, Dipl.-Ing.**
**Fasanenweg 17**
**W-8130 Starnberg(DE)**

(74) Vertreter: **Patentanwälte Dr. Solf & Zapf**
**Zeppelinstrasse 53**
**W-8000 München 80(DE)**

---

(54) **Verfahren zum Entfernen von Verunreinigungen aus einem Gas.**

(57) Die Erfindung betrifft ein Verfahren zum Entfernen von organischen Verunreinigungen aus einem Gas. Um bei einem derartigen Verfahren die Verunreinigungen zum überwiegenden Teil und in wirtschaftlicher Weise aus dem Gasgemisch entfernen zu können, wird vorgeschlagen, das zu reinigende Gas zwei aufeinanderfolgende Reinigungsstufen durchlaufen zu lassen, wobei die nach der ersten Reinigungsstufe in dem zu reinigenden Gas noch verbliebenen Verunreinigungen in der zweiten Reinigungsstufe verbrannt werden und die dabei freiwerdende Energie zum Betreiben der ersten Reinigungsstufe verwendet wird.

EP 0 442 146 A1

# VERFAHREN ZUM ENTFERNEN VON VERUNREINIGUNGEN AUS EINEM GAS

Die Erfindung betrifft ein Verfahren zum Entfernen von organischen Verunreinigungen aus einem Gas.

In der Lösungsmittelindustrie und besonders auch beim Verladen von Treibstoffen werden zur Zeit noch größere Mengen von Lösungsmitteldämpfen bzw. Kohlenwasserstoffen mit der Abluft in die Umgebung abgegeben. Es ist bekannt, daß zur Emissionsminderung das anfallende Luft-Kohlenwasserstoff-Gemisch zunächst in Kältefallen abgekühlt und zumindest teilweise auskondensiert wird. Ein derartiges Verfahren ist beispielsweise in der DE-OS 23 37 055 beschrieben. Das bekannte Verfahren hat jedoch den Nachteil, daß auch bei Anwendung sehr tiefer Temperaturen nicht alle Verunreinigungen aus dem zu reinigenden Gas abgeschieden werden und diese daher nach wie vor an die Atmosphäre abgegeben werden. Mit dem bekannten Verfahren können behördliche Vorschriften, wie sie z.B. in der TA Luft festgelegt sind, nicht eingehalten werden. Ein weiterer Nachteil ist der hohe Energieverbrauch der Kälteanlagen.

Aus der Literaturstelle: "Behandlung sowie Beseitigung der bei der Lagerung und Verladung brennbarer Flüssigkeiten entstehenden Dämpfe" von H.J. Schwefer und H. Weyer, Chem. Ing. Tech. 56 (1984) Nr. 4 S. 286-291, Verlag Chemie GmbH, D-6940 Weinheim, 1984 ist ein Verfahren nach dem Gattungsbegriff des Anspruchs 1 bekannt.

Der Erfindung liegt die Aufgabe zugrunde, ein Verfahren der eingangs genannten Art anzugeben, mit dem auf besonders wirtschaftliche Weise aus einem Gas Verunreinigungen, wie Kohlenwasserstoffe oder Dämpfe organischer Flüssigkeiten, weitgehend entfernt werden können.

Diese Aufgabe wird durch das Verfahren nach Anspruch 1 gelöst.

Es ist ein besonderer Vorteil der Erfindung, daß das zu reinigende Gas in den aufeinderfolgenden Reinigungsstufen so gereinigt werden kann, daß das Betreiben der ersten Reinigungsstufe ohne von außen dem System zugeführte Energie abläuft. Die in zwei Stufen verlaufende Reinigung ist darüber hinaus bezüglich des zu erreichenden Reinigungsgrades sehr effektiv, denn durch dieses Verfahren wird das zu reinigende Gas nahezu vollständig in verflüssigte Verunreinigungen und in gereinigtes Gas getrennt. Im Falle von Treibstoffdämpfen kann ein überwiegender Teil des Treibstoffes zur weiteren Verwendung wiedergewonnen werden, während die Abluft mit drastisch verminderten Emissionswerten entlassen werden kann.

Bei einer vorteilhaften Ausgestaltung der Erfindung wird das zu reinigende Gas in der ersten Reinigungsstufe auf eine Temperatur abgekühlt, bei der die Verunreinigungen zum überwiegenden Teil kondensieren. Das Kondensat wird in bekannter Weise vom zu reinigenden Gas abgetrennt.

Hierbei kann in einer bevorzugten Ausgestaltung der Erfindung die rückgewonnene Energie zum Betreiben einer Kälteanlage verwendet werden, mit deren Hilfe das zu reinigende Gas in der ersten Reinigungsstufe abgekühlt wird.

Erfindungsgemäß werden die Nachteile der bisherigen Verfahren vermieden, indem beim erfindungsgemäßen Verfahren die Verunreinigungen der eingangs geschilderten Art weitgehend aus dem Gas entfernt werden. So können insbesondere die geltenden behördlichenVorschriften für den Umweltschutz für die organische Gasbelastung der Luft eingehalten werden. Ein zusätzlicher Vorteil des erfindungsgemäßen Verfahrens ist die äußerst wirtschaftliche Nutzung der in der zweiten Reinigungsstufe entstehenden Energie zum Betreiben der ersten Reinigungsstufe.

Nach der Erfindung wird die bei der Verbrennung der Verunreinigungen freiwerdende Energie zum Betrieb einer Absorptionskälteanlage genützt. Beispielsweise kann so das im Kreislauf geführte Kältemittel einer derartigen Absorptionskälteanlage durch die in der zweiten Reinigungsstufe entstehende Wärmeenergie aus der aus Kältemittel und Absorptionsflüssigkeit bestehenden Lösung ausgetrieben werden.

Nach einer bevorzugten Ausgestaltung der Erfindung wird die erste Reinigungsstufe so betrieben, daß die Menge der nach der ersten Reinigungsstufe im Gas verbliebenen Menge der Verunreinigungen ausreicht, um mit Hilfe der in der zweiten Reinigungsstufe freiwerdenden Energie die erste Reinigungsstufe zu betreiben. Erfindungsgemäß bringt dieses Verfahren den wirtschaftlichen Vorteil, daß die erste Reinigungsstufe vollständig ohne Fremdenergie, d.h. Energie, die von außen dem System zugeführt wird, abläuft.

Eine vorteilhafte Anwendung findet das erfindungsgemäße Verfahren in der Rückgewinnung von Vergaserkraftstoffen beim Verladen oder Umfüllen von Kraftstoffen. Das in den Kraftstoffbehältern entstehende Luft-Kohlenwasserstoff- Gemisch kann erfindungsgemäß nach den Reinigungsstufen in Kraftstoff und in nach den geltenden behördlichen Vorschriften gereinigte Luft aufgespalten werden. Durch diese Maßnahme wird in äußerst wirtschaftlicher Weise aus dem beim Umschlagen von Vergaserkraftstoffen in hohem Maße entstehende Luft-Kraftstoff-Gemisch der kostspielige Kraftstoff ausgefiltert und wiedergewonnen.

Im folgenden soll anhand einer Zeichnung ein Ausführungsbeispiel einer erfindungsgemäßen Vorrichtung beschrieben werden.

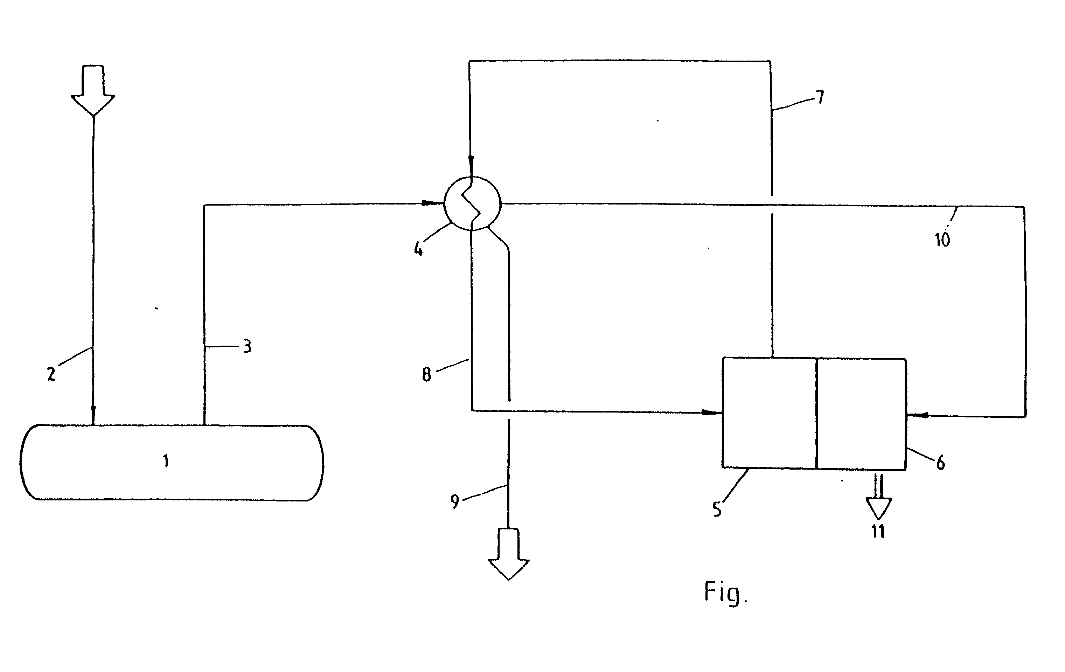

Die Figur zeigt ein Verfahrensschema mit einer Absorptionskälteanlage, gekoppelt mit einer Verbrennungsstufe.

In der Figur ist schematisch ein Tank 1 dargestellt, dem über eine Leitung 2 flüssige Kohlenwasserstoffe zugeführt werden. Beim Einfüllen von Kohlenwasserstoffen geht ein Teil der Kohlenwasserstoffe in die gasförmige Phase über, der sich mit der im Tank befindlichen Luft vermischt. Das Luft-Kohlenwasserstoff-Gemisch wird erfindungsgemäß nicht an die Atmosphäre abgegeben, sondern über eine Leitung 3 einer Anlage 4 als erste Reinigungsstufe zugeführt, in der die Kohlenwasserstoffe zum überwiegenden Teil abgeschieden werden.

Apparat 4 ist in diesem Ausführungsbeispiel schematisch als Wärmetauscher dargestellt, in dem das Luft-Kohlenwasserstoff-Gemisch beispielsweise auf -50° C abgekühlt wird. Zur Kälteerzeugung ist eine Kälteanlage 5, beispielsweise eine Absorptionskälteanlage, vorgesehen, die mit einem im Kreislauf geführten Kältemittel betrieben wird. Durch eine Leitung 7 wird das kalte Kreislaufmittel aus der Kälteanlage 5 der Anlage 4 zugeführt. Im Wärmetausch mit dem Kreislaufmittel wird das Luft-Kohlenwasserstoff-Gemisch in Anlage 4 abgekühlt und die Kohlenwasserstoffe auskondensiert. Diese werden über eine Leitung 9 aus Anlage 4 abgeführt. Über eine Leitung 8 wird das erwärmte Kreislaufmittel zur erneuten Abkühlung in die Kälteanlage 5 geleitet.

Nach der Abkühlung der zu reinigenden Luft sowie der Kondensation und Abscheidung der Kohlenwasserstoffe in Apparat 4 sind aber in der austretenden Luft immer noch Restmengen von Kohlenwasserstoff in der Luft vorhanden. Dieses Luft-Kohlenwasserstoff-Gemisch wird erfindungsgemäß nicht an die Atmosphäre abgegeben, sondern zur Entfernung dieser noch verbleibenden Kohlenwasserstoffe über Leitung 10 einer zweiten Reinigungsstufe zugeführt und einer Nachbehandlung unterzogen.

Im dargestellten Ausführungsbeispiel der Erfindung wird in der zweiten Reinigungsstufe 6 in einem Brenner die noch Kohlenwasserstoffe enthaltende Luft verbrannt. Die bei der Verbrennung in der zweiten Reinigungsstufe 6 entstehende Abluft wird über eine Leitung 11 an die Umgebung abgegeben, wobei die Emissionswerte unterhalb der gesetzlich vorgeschriebenen Werte liegen. Die bei der Verbrennung freiwerdende Wärmeenergie dient zur Erzeugung der in der Kälteanlage 5 erforderlichen Kälte.

**Patentansprüche**

1. Verfahren zum Rückgewinnen von flüssigen Kohlenwasserstoffen aus einem beim Einfüllen von flüssigen Kohlenwasserstoffen (2) in einen Tank (1) entstehenden gasförmigen Kohlenwasserstoff-Luft-Gemisch (3), bei dem das Gemisch (3) in zwei aufeinanderfolgenden Reinigungsstufen behandelt wird, wobei die nach der ersten Reinigungsstufe in dem Gemisch (10) noch verbliebenen gasförmigen Kohlenwasserstoffe in einer zweiten Reinigungsstufe (6) verbrannt werden, und wobei die dabei freiwerdende Energie nutzbar verwendet wird,
dadurch **gekennzeichnet,**
daß die Verbrennung der zweiten Reinigungsstufe in einem Brenner (6) zum Beheizen einer Absorptionskälteanlage (5) erfolgt, deren Kälte in der ersten Reinigungsstufe zur Kondensation eines Teiles der Kohlenwasserstoffe aus dem Gemisch (3) dient.

2. Verfahren nach Anspruch 1,
dadurch **gekennzeichnet,**
daß die erste Reinigungsstufe so betrieben wird, daß die Menge der nach der ersten Reinigungsstufe im Gas verbliebenen Kohlenwasserstoffe ausreicht, um mit Hilfe der in der zweiten Reinigungsstufe freiwerdenden Energie die erste Reinigungsstufe zu betreiben.

Fig.

Europäisches
Patentamt

**EUROPÄISCHER
RECHERCHENBERICHT**

Nummer der Anmeldung

**EP 90 12 5649**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-9 307 49  (O.H. MUCK)<br>* das ganze Dokument *<br>– – – | 1 | B 01 D 53/34<br>B 01 D 5/00 |
| D,Y | CHEMIE-INGENIEUR-TECHNIK Band 56, Nr. 4, 1984, Seiten 286-291, Weinheim, DE; H.J. SCHWEFER et al.: "Behandlung sowie Beseitigung der bei Lagerung und Verladung brennbarer Flüssigkeiten entstehenden Dämpfe"<br>* das ganze Dokument *<br>– – – – – | 1 | |
| | | | **RECHERCHIERTE SACHGEBIETE (Int. Cl.5)**<br><br>B 01 D 53/00<br>B 01 D 5/00<br>C 10 G 5/00 |

Der vorliegende Recherchenbericht wurde für alle Patentansprüche erstellt

| Recherchenort | Abschlußdatum der Recherche | Prüfer |
|---|---|---|
| Berlin | 21 Mai 91 | BERTRAM H E H |